Europäisches Patentamt

**European Patent Office**

**Office européen des brevets**

(11) Publication number : **0 479 516 A1**

# EUROPEAN PATENT APPLICATION

(21) Application number : **91308911.6**

(22) Date of filing : **30.09.91**

(51) Int. Cl.$^5$ : **B65G 15/62, F27B 9/24, C21D 9/00**

(30) Priority : **29.09.90 IE 1146/90**

(43) Date of publication of application :
**08.04.92 Bulletin 92/15**

(84) Designated Contracting States :
**AT BE CH DE DK ES FR GB GR IT LI LU NL SE**

(71) Applicant : **GRAPHITE GLIDES LIMITED**
**Poulakerry, Kilsheelin**
**Clonmel, County Tipperary (IE)**

(72) Inventor : **Fitzsimons, Joss**
**Sweeney's Cottage, Ardfinnan, Clonmel**
**County Tipperary (IE)**

(74) Representative : **Godwin, Edgar James et al**
**MARKS & CLERK 57-60 Lincoln's Inn Fields**
**London, WC2A 3LS (GB)**

(54) **Improvements in and relating to conveyors.**

(57) A static support member (4), a number of which are mounted on a base support (5) beneath a conveyor belt (2) to support the conveyor belt (2) which slides over the support members (4) in use. Each support member (4) has a graphite bearing member (6) which engages against an underside of the conveyor belt (2).

Fig. 1

EP 0 479 516 A1

This invention relates to a support member for a conveyor belt, in particular for use in medium or relatively high temperature applications.

It is common practice to support a conveyor belt on a number of spaced-apart rollers. Rollers, bearings and bearing supports complicate the design, especially in ovens. Access for cleaning is impaired. In relatively high temperature applications, such as in tunnel dryers, ovens or kilns, rollers present difficulties where support bearings for the rollers are provided outside the kiln for cooler running, the roller shafts projecting out through the sides of the oven to run in the support bearings. Some form of sealing arrangement may be required to prevent escape of noxious or unpleasant fumes from the oven where the rollers project through the sides of the oven. Further, bearings on oven rollers are particularly prone to seizing, due to heat transfer along the roller shaft to the bearings. The roller then becomes flattened by wear on one side and becomes unbalanced, so that even when new bearings are fitted, the roller will still not course leads to long term wear of both the roller and belt. There is also increased loading on the conveyor belt drive.

The belt sags between rollers, causing the product on the belt to flex slightly. This can be a disadvantage. For example, if the product is being bonded by an adhesive in an oven, this flexing adversely effects the bonding process and leads to reduced strength of the finished product.

An alternative arrangement is to provide a number of spaced-apart static support members such as skid bars or plates, over which the conveyor belt runs. Steel, cast iron and bronze support members have been used in hot applications. A drawback of these fixed support members is the high friction between the support members and the conveyor belt, which in hot applications may be for example a wire link belt or a steel band. This can cause severe wear of the conveyor belt which has to be changed regularly. This problem is particularly acute at high belt speeds and when steel belts are supported on cast iron or steel support members. Relatively high tensions are required to overcome friction, leading to the need for relatively high motive power. Much of this power is essentially contributes to the wear. Further the high tension leads to slip on the conveyor belt drive roller. Also as the support members themselves wear out they can be difficult to replace.

When belts, such as spirally wound steel wire belts are used wear is not confined to the points of contact of the belt and support. The points at which the wires themselves touch each other also wear. This type of wear is worsened by the high belt tensions associated with these type of static belt supports thus reducing the life of the belt. Also, on long conveyors of this type, tension in the belt can be so high as to cause the wires to yield under the strain.

These belts then become very difficult to track correctly.

Lubrication of conveyors using conventional static support systems is very important to reduce wear on the belt and support. This can be complicated, messy and the product. (which may be food) can become contaminated. Maintenance and upkeep of these lubricating systems can be a problem, so that high wear rates may still be evident.

The present invention is directed towards overcoming these problems.

According to the invention there is provided a support member for a conveyor belt, comprising a graphite bearing member and an associated support means for supporting the bearing member beneath the conveyor belt the bearing member having a bearing face for engagement against an underside of the conveyor belt to support the conveyor belt. Advantageously the belt can graphite is typically an artificial commercial grade graphite composed mainly of graphite and a bonding agent made in a graphitizing furnace at temperatures in the order of 3000°C.

In one embodiment of the invention the bearing member is fixed on the support means. Alternatively the bearing member may be releasably attached to the support means.

In a further embodiment the bearing face is substantially flat. In another arrangement the bearing face may be arcuate.

In a preferred embodiment the bearing member is an elongate block of graphite. Alternatively the bearing member may comprise a number of spaced-apart graphite bearing portions on the support means.

In another embodiment the support means is of channel section having a base with upstanding side walls, the bearing member being secured on the base between the side walls.

In a another embodiment the bearing member is clamped betweeen the side walls.

In another embodiment the support member further includes a metal bearing member provided on the support means and having a bearing face which forms an extension of the graphite bearing face. Ideally the metal bearing member is integrally formed with the support means.

In another aspect of the invention there is provided a support assembly for a conveyor belt comprising a number of the support members as previously described mounted on a base support. Preferably the support members are spaced-apart on the base support. The support members may be arranged in a herringbone formation on the base support. In some cases metal support members may be interposed between at least some of the graphite support members.

In another aspect of the invention there is provided conveyer assembly incorporating one or more support members as previously described, the conveyor assembly having an endless conveyor belt mounted between a drive roller and a tail roller, drive means being provided for the drive roller, the support members being mounted intermediate the drive roller and tail roller for engagement against an underside of the conveyor belt as it moves on its load supporting path between the drive roller and tail roller.

The invention will be more clearly understood from the following description of some embodiments thereof, given by way of example only, with reference to the accompanying drawings, in which;

Fig. 1 is a diagrammatic perspective view of portion of a support assembly for a conveyor according to the invention,

Fig. 2 is a plan view of the support assembly of Fig. 1,

Fig. 3 is a detail aide sectional view taken along the lines III - III of Fig. 1, showing a support member forming portion of the support assembly,

Fig. 4 is a detail side view of portion of the support assembly of Fig. 1,

Fig. 5 is a diagrammatic perspective view of a conveyor assembly incorporating the support assembly of Fig. 1,

Fig. 6 is a plan view similar to Fig. 2 of a support assembly for a conveyor according to a second embodiment of the invention,

Fig. 7 is a plan view of a support assembly for a conveyor according to a third embodiment of the invention,

Fig. 8 is a detail perspective view of portion of the support assembly of Fig. 7,

Fig. 9 is a perspective view of a support member for a conveyor belt according to a fourth embodiment of the invention,

Fig. 10 is a support member for a conveyor belt according to a fifth embodiment of the invention,

Fig. 11 is a support member for a conveyor belt according to a sixth embodiment of the invention,

Fig. 12 is a perspective partially exploded view showing a support member for a conveyor belt according to a seventh embodiment of the invention,

Fig. 13 is a plan view of a graphite bearing member according to another embodiment of the invention,

Fig. 14 is a cross-sectional view of the graphite bearing member of Fig. 13 taken along the line XIV-XIV of Fig. 13,

Fig. 15 is a diagrammatic illustration of an oven incorporating a conveyor belt according to another embodiment of the invention, and

Fig. 16 is a diagrammatic illustration of another oven arrangement according to another embodiment of the invention.

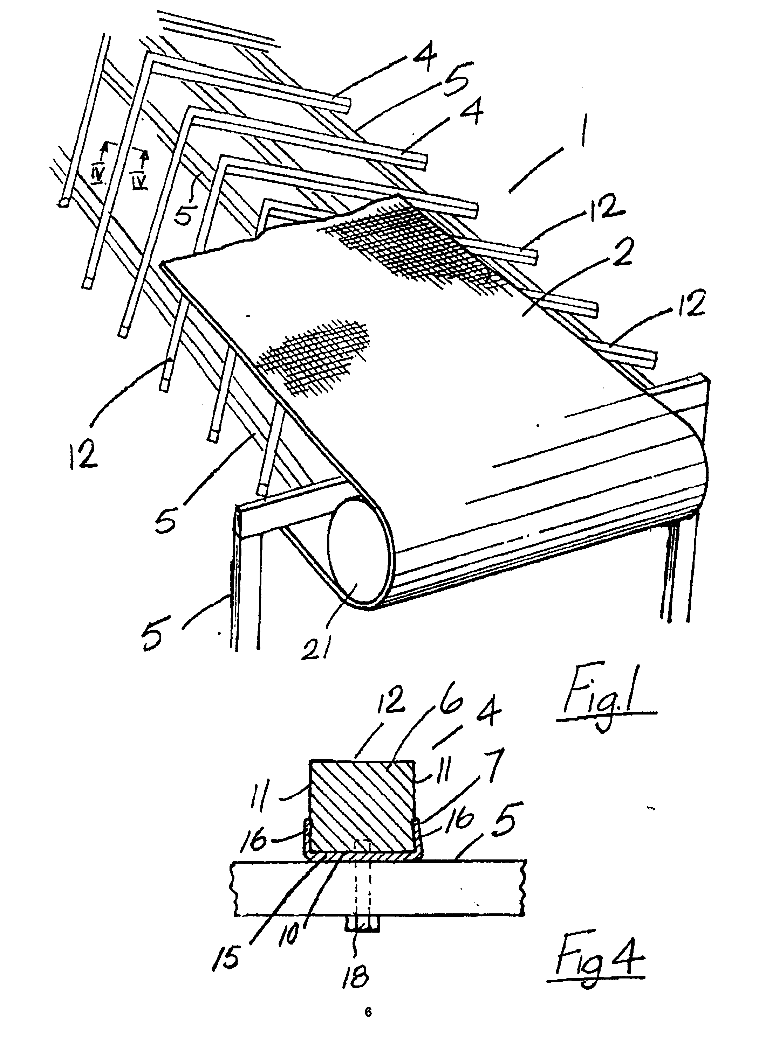

Referring to the drawings, and initially to Figs. 1 to 4 thereof, there is illustrated a support assembly indicated generally by the reference numeral 1 for a wire mesh conveyor belt 2 which is slidably supported on the support assembly 1. The support assembly 1 comprises a number of spaced-apart support members 4 mounted on an open framework base support 5 in a herringbone formation.

Each support member 4 comprises a graphite bearing member 6 mounted in a channel section support means 7. The bearing member 6 is formed by an elongate block of graphite having a substantially rectangular cross-section with a bottom face 10 side faces 11 and a top bearing face 12 which is substantially flat.

The support means 7 has a base 15 with upstanding side walls 16. A lower portion of the bearing member 6 is clamped between the side walls 16 to rigidly secure the bearing member 6 on the channel section support means 7. The support means 7 may be either rigidly secured on the base support 5 or alternatively may be detachably mounted on the base support 5 by bolts 18 for example as shown in Fig. 4.

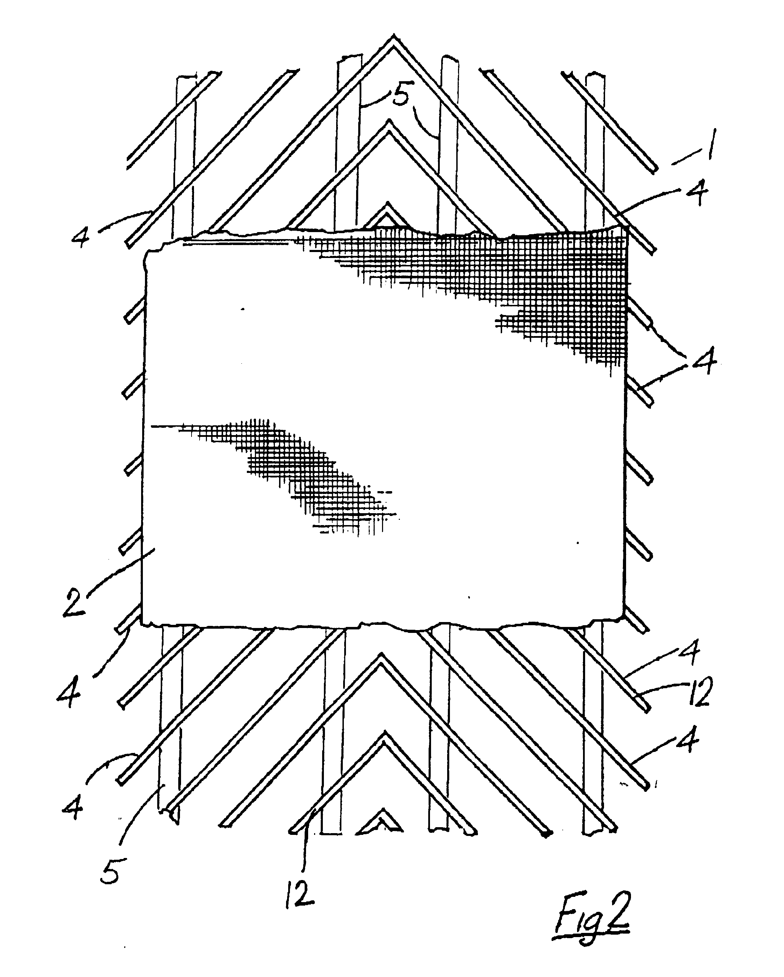

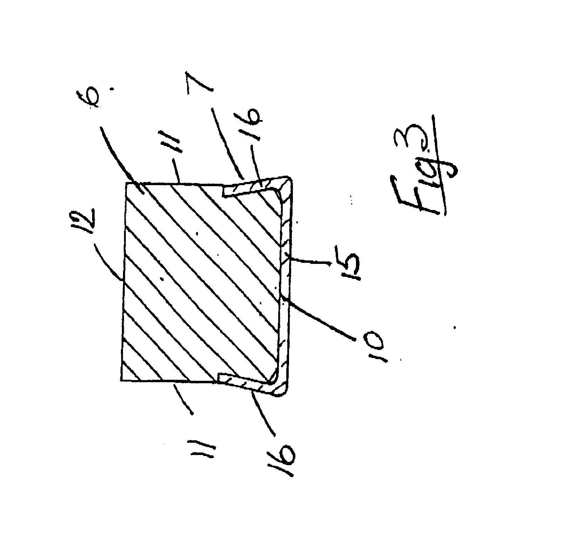

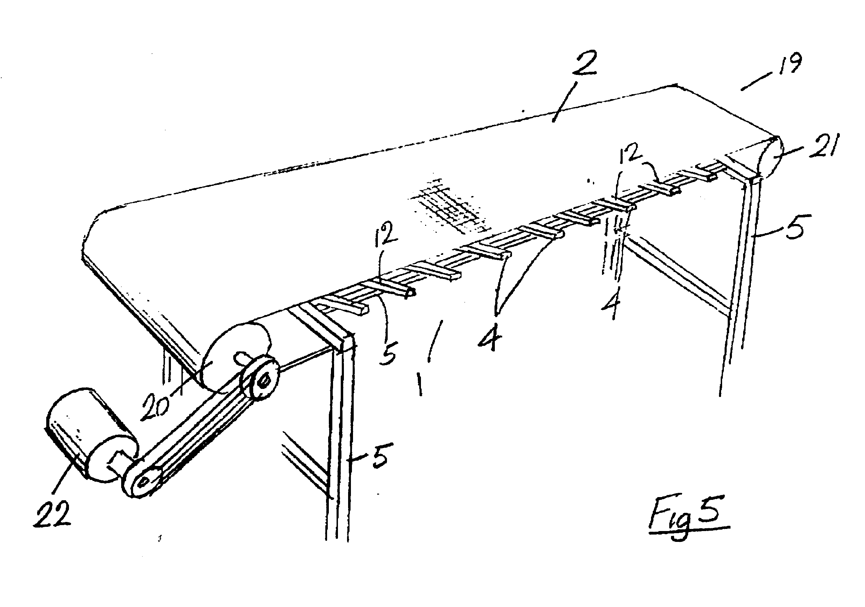

Fig. 5 shows the support assembly 1 incorporated in a conveyor assembly 19 which includes the endless conveyor belt 2 mounted between a drive roller 20 and a tail roller 21. Drive means for the drive roller 20 is provided by an electric motor 22. Tension and tracking rollers would also be provided for the belt 2 in conventional fashion although these have been omitted for clarity. It will be noted that the support members 4 are mounted intermediate the drive roller 20 and tail roller 21 such that the upper bearing face 12 engages against an underside of the conveyor belt 2 as it moves on its load supporting path between the tail roller 21 and drive roller 20.

It will be appreciated that graphite is essentially a solid lubricant, unlike other low friction materials such as teflon or nylon, and there will be low friction between the bearing faces 12 and the belt 2. No other lubrication system is needed. As well as allowing smoother running of the conveyor belt 2 this will also reduce the wear rate on the conveyor belt 2. As the friction between the conveyor belt 2 and bearing members 12 in reduced the power requirement for driving the conveyor belt 2 is also reduced. The reduction in power input and wear on the belt is particularly evident in conveyors operating a high belt speeds and also on long conveyor belts. Speeds in excess of 130m/min have presented no problem. The graphite can also advantageously withstand the relatively high temperatures used in tunnel kilns and the like.

Experimental results and the results obtained on a commercially operating oven have been surprisingly successful. Wear rates on the belts are extremely low, which is not surprising. However, it was anticipated that there would be considerable wear on the graphite support. Surprisingly this is not the case. The wear of the graphite support was much lower than anticipated. The oven used is 30 m long and the conveyor has a belt width of 2.3 m. Typical speeds are 60 - 90 m/min. Based on present rates of wear the graphite supports should last for many years. Experiments have also been conducted using high loading to get quicker experimental results comparable to use of the supports over a long period. Even under relatively high loading the graphite supports fared much better than expected.

It will also be appreciated that the supports members can be readily easily replaced for maintenance purposes when necessary.

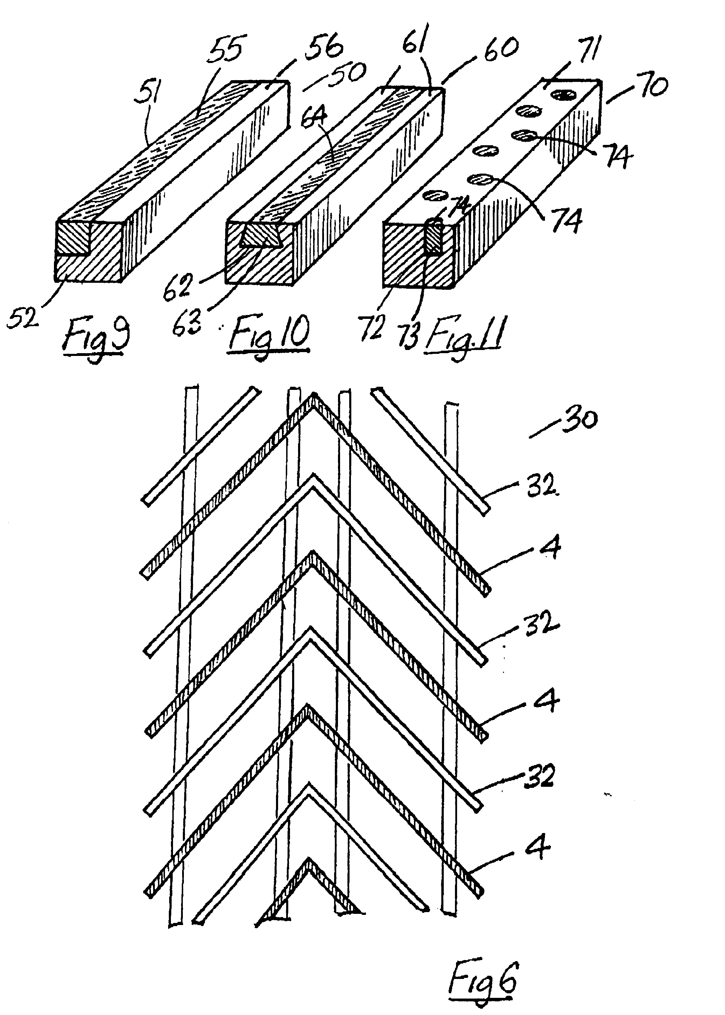

Referring now to Fig. 6 there is illustrated a support assembly 30 according to a second embodiment of the invention. This support assembly 30 is similar to the support assembly described previously with reference to Figs. 1 to 5 and like parts are assigned the same reference numerals. In this case metal (preferably steel or cast iron) support members 32 are interposed between the graphite support members 4. This particular arrangement is suitable for use with conveyor belts subjected to relatively high loadings, the combination of the graphite support members 4 and metal support members 32 giving both good running and low friction qualities. It will be noted that graphite worn onto an underside of the conveyor belt as it passes over the graphite support members 4 lubricates the conveyor belt for smooth passage over the metal support members 32.

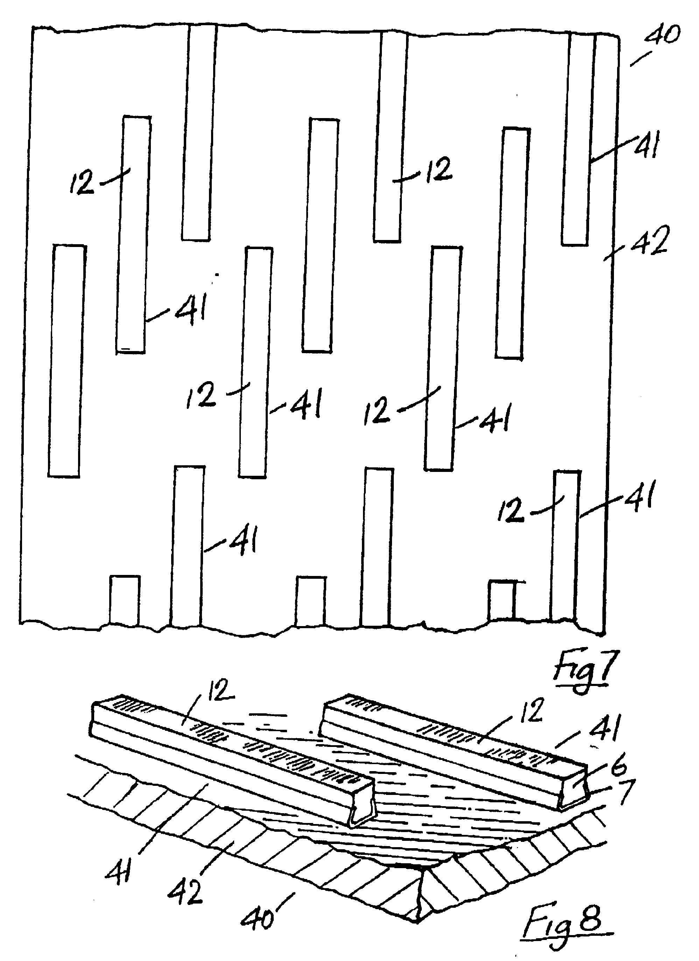

Referring now to Figs. 7 and 8, there is illustrated a support assembly 40 for a conveyor belt (not shown) according to a third embodiment of the invention. In this case the support assembly 40 comprises a number of spaced-apart support members 41 mounted on a base support 42 in a staggered formation. The support members 41 are of similar construction to the support members described previously with reference to Figs. 1 to 5 and like parts are assigned the same reference numerals.

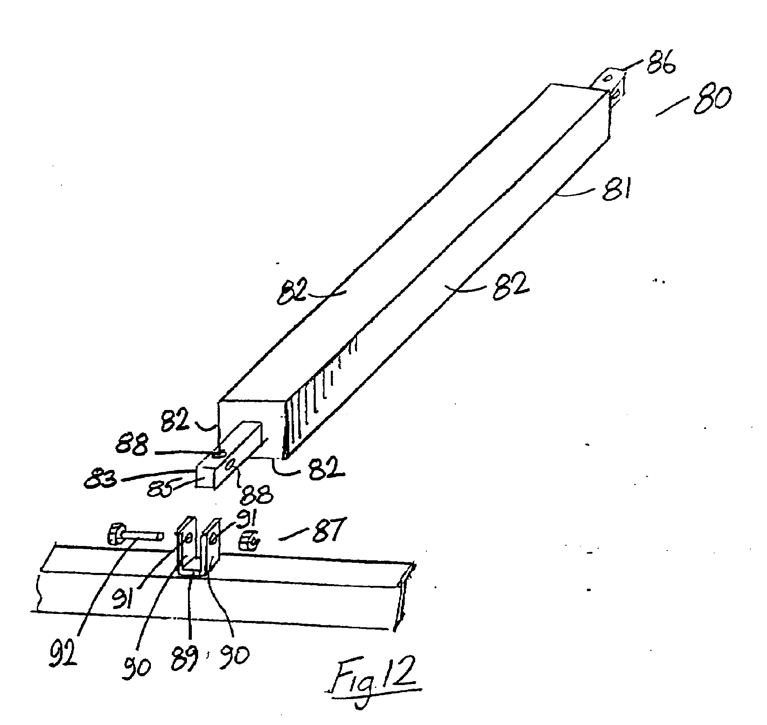

Referring now to Fig. 9 there is illustrated a support member 50 according to a fourth embodiment of the invention. In this case the support member 50 comprises a graphite bearing member 51 formed by an elongate block of graphite mounted on an L-shaped support body 52. The bearing member 51 can be secured on the support member 50 by any suitable means such as bolts, clamp or adhesive for example. The bearing member 51 has a top bearing face 55. A top face 56 of the support body 52 also forms a bearing face which is an extension of the graphite bearing face 55. The support member 50 may be mounted on a base support similar to that shown in the support assembly of Figs. 1 to 5. This particular arrangement of combined graphite and metal bearing face is for use with conveyor belts carrying relatively high loadings.

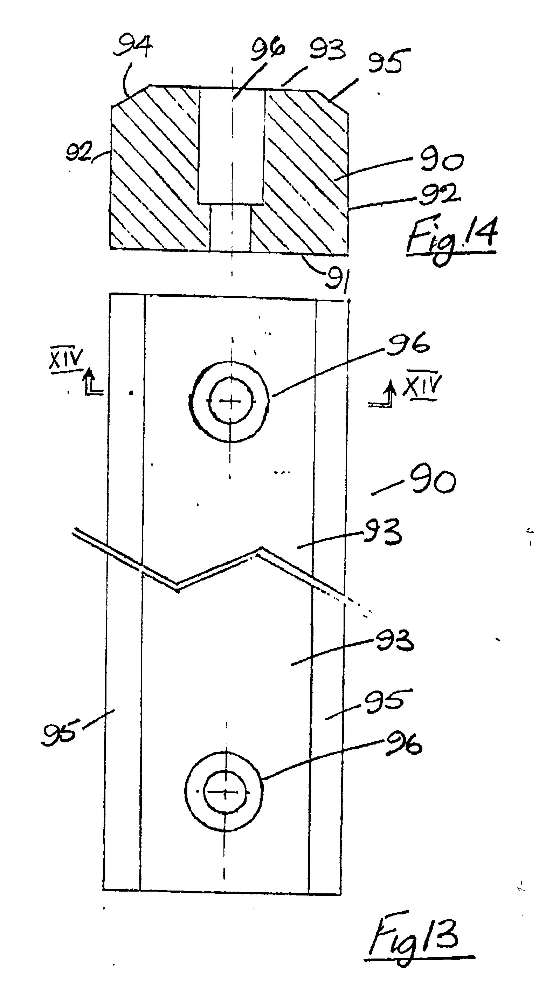

Figs. 10 and 11 show alternative arrangements of support members, each having a combined graphite and metal upper bearing face. Referring first to Fig. 10 a metal (preferably steel or cast iron) support body 60 is provided having an upper bearing face 61. A dovetail slot 62 in the upper bearing face 61 receives a complementary shaped block of graphite 63 having a top bearing face 60. Referring now to Fig. 11 a metal support body 70 has an upper bearing face 71. A number of spaced apart slots 72 are provided extending downwardly from the top bearing face 71. Graphite bearing portions 73 are mounted in each slot 72 and have a top bearing face 74.

Referring now to Fig. 12, a support member 80 according to another embodiment of the invention is shown. In this case the support member 80 comprises a rectangular block of graphite 81 having four outer flat bearing faces 82. A mounting bar 83 passes centrally through the block of graphite 81. Outer ends 85, 86 of the bar 83 extend outwardly of each end of the graphite block 81 for attachment to a mounting support portion which is indicated by the reference numeral 87. Mutually perpendicular through holes 88 are provided in each outer end 85, 86 of the bar 83. A U-shaped receiver bracket 89 is provided on the mounting support 87 for reception of the outer end 85, 86 of the bar 83. Upwardly extending arms 90 of the bracket 89 have through holes 91 for reception of a bolt 92 engagable with the holes 88 in the bar 83 to secure the support member 80 on the mounting support 87. Two parallel mounting supports 87 are provided for supporting a number of the support members 80 in line.

In use, a conveyor belt (not shown) passes over and is supported on the uppermost bearing faces 82 of the support members 80. When this face 82 has been worn down the support member 80 can be disengaged from the mounting support 87 and rotated through 90° to present another bearing face 82 of the support member 80 upwardly to support the conveyor belt. Similarly when this face 82 is worn, the support member 80 can be rotated to present the next bearing face 82 to the conveyor belt.

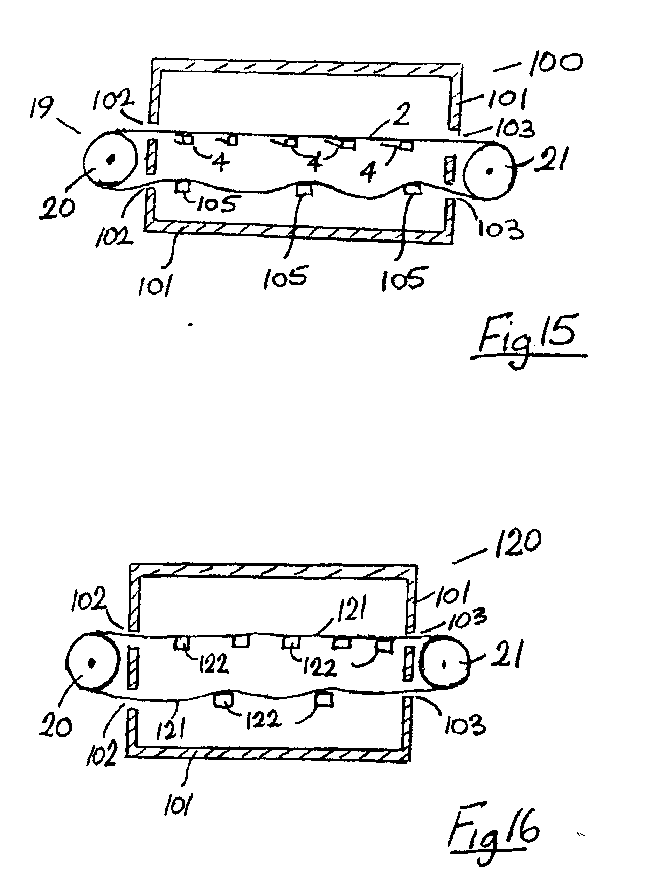

Referring now in particular to Figs. 13 and 14, there is illustrated a graphite bearing member 90 according to another embodiment of the invention. The bearing member 90 comprises an elongate block of graphite of generally rectangular cross-section having a bottom face 91, side faces 92 and a top face 93. The top face 93 has a bevelled front face 94 and rear face 95. A pair of counter sunk through holes 96 are provided in the block extending between the top face 93 and the bottom face 91 for reception of both (not shown) for mounting the bearing member 90 on a base support such as the one described in the embodiment of Figs. 1 to 5.

It will be appreciated that many different types of mounting arrangements for the graphite bearing members are possible and only a few examples have been shown herein.

Referring now to Fig. 15, there is illustrated an oven 100 incorporating a conveyor assembly similar to that shown in Fig. 5 and like parts are assigned the same reference numerals. The oven 100 has an outer casing 101 having openings 102, 103 at each end for through passage of the conveyor belt 2. In passing through the oven 100 on its load supporting path the belt 2 is supported on the bearing members 6. On the return legs of the travel the belt 2 is supported by a number of spaced-apart transversely extending graphite blocks 105.

Referring now to Fig. 16, another oven arrangement 120 is shown generally similar to the oven arrangement of Fig. 15 and like parts are assigned the same reference numeral. In this case the conveyor belt comprises a steel band 121 which is supported on transversely extending graphite bearing members 122 on its passage between the drive roller 20 and tail roller 21.

The invention is not limited to the embodiments hereinbefore described which may be varied in both construction and detail.

**Claims**

1. A support member for a conveyor belt comprising a graphite bearing member and an associated support means for supporting the bearing member beneath the conveyor belt, the bearing member having a bearing face for engagement against an underside of the conveyor belt to support the conveyor belt.

2. A support member as claimed in claim 1 wherein the bearing member is fixed on the support means.

3. A support member as claimed in claim 1 wherein the bearing member is releasably attached to the support means.

4. A support member as claimed in any preceding claim wherein the bearing member is an elongate block of graphite.

5. A support member as claimed in any of claims 1 to 3 wherein the bearing member comprises a number of spaced-apart graphite bearing portions on the support means.

6. A support member as claimed in any preceding claim wherein the support means is of channel section having a base with upstanding side walls, the bearing member being secured on the base between the side walls.

7. A support member as claimed in any of claims 1 to 6 wherein the support member further includes a metal bearing member provided on the support means and having a bearing face which forms an extension of the graphite bearing face.

8. A support assembly for a conveyor belt comprising a number of the support members as claimed in any preceding claim mounted on a base support.

9. A support assembly as claimed in claim 8 wherein metal support members are interposed between at least some of the graphite support members.

10. A conveyor assembly incorporating one or more support members as claimed in any of claims 1 to 7, the conveyor assembly having an endless conveyor belt mounted between a drive roller and a tail roller, drive means being provided for the drive roller, the support members being mounted intermediate the drive roller and tail roller for engagement against an underside of the conveyor belt as it moves on its load supporting path between the drive roller and tail roller.

11. An oven incorporating the conveyor assembly as claimed in claim 10.

Fig.1

Fig.4

*Fig2*

Fig 3

EP 0 479 516 A1

Fig 5

EP 0 479 516 A1

55 56
51 50
61 60 71 70
64 74
52 74 74
62 63 72 73

Fig 9    Fig 10    Fig.11

30
32
4
32
4
32
4

Fig 6

40

41

12

42

12

41

41

12

41

12

41

41

12

41

*Fig 7*

12

12

41

6

7

41

42

40

*Fig 8*

Fig 12

Fig.14

Fig13

_Fig.15_

_Fig.16_

EP 0 479 516 A1

European Patent Office

**EUROPEAN SEARCH REPORT**

Application Number

EP 91 30 8911

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-A-1508573 (HEIN, LEHMANN & CO) <br> * the whole document * <br> --- | 1, 3, 8, 10, 11 | B65G15/62 <br> F27B9/24 <br> C21D9/00 |
| A | DE-A-2344692 (EISENWERK WESERHÜTTE) <br> * page 1, line 21 - page 2, line 7; figures 1, 2 * <br> --- | 1, 2, 8, 10 | |
| A | DE-A-1905690 (THERMAL SYNDICATE) <br> * page 8, lines 28 - 34; claim 1 * <br> ----- | 1, 11 | |
| | | | TECHNICAL FIELDS SEARCHED (Int. Cl.5 ) <br><br> B65G <br> F27B <br> C21D |

The present search report has been drawn up for all claims

| Place of search | Date of completion of the search | Examiner |
|---|---|---|
| BERLIN | 09 JANUARY 1992 | SIMON J. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)

15